# EUROPEAN PATENT APPLICATION

(11) **EP 0 936 760 A2**
(43) Date of publication of application: **18.08.1999**
(21) Application number: 99101465.5
(22) Date of filing: 27.01.1999
(51) Int. Cl.: H04B 10/08

(54) **Optical transmission system and method of surveying the same**

(30) Priority: 16.02.1998 JP 3285998
(71) Applicant: Hitachi, Ltd., Chiyoda-ku, Tokyo 101-8010 (JP)
(72) Inventor: Shibasaki, Masatoshi, Kanagawa-ken (JP); Sakai, Kazutaka, Yamato-shi, Kanagawa-ken (JP); Kosaka, Junya, Yokohama-shi, Kanagawa-ken (JP); Suzuki, Takayuki, Yokohama-shi, Kanagawa-ken (JP); Sekine, Kenro, Kokubunji-shi, Tokyo (JP); Imada, Nobuo, Chigasaki-shi, Kanagawa-ken (JP); Mori, Takashi, Yokohama-shi, Kanagawa-ken (JP); Nakano, Hiroyuki, Yokohama-shi, Kanagawa-ken (JP)
(74) Representative: Strehl Schübel-Hopf & Partner

(57) **Abstract**

An optical transmission system and a method of surveying the optical transmission system for transmitting a plurality of optical main signals are described. The optical transmission system includes a plurality of optical transmission subsystems connected in parallel for transmitting one of the optical main signals. Two of the plurality of optical transmission subsystems have an optical surveillance signal transmitting unit. One of the optical surveillance signal transmitting units is used as a working system and the other is used as a protection system. One of optical surveillance signal transmitting units performs transfer of monitor information of the optical transmission subsystems.

## Description

This invention relates to a Japanese Patent Application No.JP-10-032859 filed February 16, 1998 entitled "Optical Transmission System, End Terminal And Optical Repeater" by J. Kosaka et al., which will be filed to USPTO.

### Background of the Invention

The present invention relates to optical transmission systems which transmits a wavelength multiplexed optical signals by using wavelength division multiplexing/demultiplexing equipment and a method of supervising the optical transmission system.

An optical transmission system based on techniques associated with the present invention is disclosed in U. S. Patent No. 5,500,756, which system transmits a main light signal subjected to a wavelength division multiplexing operation through a single optical fiber having optical repeaters inserted therein on the way and also transmits an optical service channel (OSC) signal for transmission of such a service channel signal as service channel information signal between equipment in the system as multiplexed with the main light signal.

The above optical transmission system based on techniques associated with the present invention describes multiplexing between the light signal and optical service channel signal but fails to describe a method of surveilling whole system in case of operating several system.

Therefore, because surveillance equipment were provided each system independently, the surveillance system and work, etc. becomes complex. And, reliability of the whole surveillance system cannot be made higher than the surveillance system singleness use. Moreover, the whole surveillance system had a problem that cost is high.

### Summary of the Invention

It is therefore an object of the invention to provide an optical transmission system and method of surveilling the optical transmission system, and the system can surveille the system effectively, improve reliability of the system and reduce the cost of the system when the system includes a plurality of optical transmission sub-systems.

In accordance with an aspect of the present invention, the above object is attaind by providing an optical transmission system and a method of surveilling the optical transmission system for transmitting a plurality of optical main signals, wherein the system includes a plurality of optical transmission subsystem connected in parallel for transmitting one of the optical main signals, two of the plurality of optical transmission subsystems have an optical surveilance signal transmittin unit, one of the optical surveilance signal transmitting unit is used as a working system and the other is used as a protection system and oneof optical surveilance transmittiong units performs transfer of monitor information on the opticao transmission subsystems.

In accordance with an aspect of the present invention, the above object is attained by providing an optical transmission system for transmitting an optical main signal, having a first optical transmission subsystem having a first optical surveillance signal transmitting unit for transmitting an optical surveillance signal, a second optical transmission subsystem having a second optical surveillance signal transmitting unit for transmitting the optical sureillance signal, a line regenerator equipment which regenerates the optical main signal and an enhanced optical fiber provided between the first and the second optical surveillance signal transmitting unit for transmitting the optical surveillance signal, wherein said first optical transmission subsystem, said line regenerator and said second optical transmission subsystem are connected in series for transmitting the optical main signal.

In accordance with an aspect of the present invention, the above object is attained by providing a method of sureilling an optical transmission system which transmits a plurality of optical main signal,
wherein said system has a plurality of optical transmission subsystem connected in parallel for transmitting one of the optical main signals; and two of the plurality of optical transmission subsystems have an optical surveilance signal,
and wherein one of the optical surveilance transmitting unit is used as a working system and the other is used as a protection system and said method including the steps of surveiling the optical transmission subsystems, multiplexing surveilance signal which includes information of the optical transmission system and one of main signals to a multiplexed light and transmitting the multiplexed light.

In accordance with an aspect of the present invention, the above object is attained by providing A method of surveilling an optical transmission system, according to above, wherein said surveillance signal has a frame format.

As it is explained above, according to a present invention, an optical transmission systems are operated in series and in parallel, the optical transmission system also can be supervised efficiently.

Therefore, the optical transmission system that can reduce cost and its supervision method can be provided.

### BRIEF DESCRIPTION OF THE DRAWINGS

Preferred embodiments of the present invention will now be described in Conjunction with the accompanying drawings, in which;
Fig. 1A shows an arrangement of an optical transmission system for transmitting multi-wavelength light signals with use of wavelength division multiplexing/demultiplexing equipment when the system is of a type which transmits 4 up light signals of 4 wavelengths and 4 down light signals of 4 wavelengths through a single optical fiber;
Fig. 1B shows an arrangement of an optical transmission system for transmitting multi-wavelength light signals with use of wavelength division multiplexing/demultiplexing equipment when the system is of a type which transmits up light signals of 8 wavelengths and down light signals of 8 wavelengths through a single optical fiber;
Fig. 1C shows an arrangement of an optical transmission system for transmitting multi-wavelength light signals with use of wavelength division multiplexing/demultiplexing equipment when the system is of a type wherein an exclusive optical fiber is used for each of signal transmission directions (up and down) and correspondingly line amplifiers to be inserted in the optical fibers are of a unidirectional type;
Fig. 2 is a diagram for explaining how to monitor transmission of fault information including a fault location to an end terminal with use of monitor or surveillance light;
Fig. 3 is another diagram for explaining how to monitor transmission of fault information including a fault location to an end terminal with use of monitor light;
Fig. 4 is a further diagram for explaining how to monitor transmission of fault information including a fault location to an end terminal with use of monitor light;
Fig. 5 is yet another diagram for explaining how to monitor transmission of fault information including a fault location to an end terminal with use of monitor light;
Fig. 6 is yet a further diagram for explaining how to monitor transmission of fault information including a fault location to an end terminal with use of monitor light;
Fig. 7 is a block diagram schematically showing an exemplary arrangement of an optical transmission system including a single system;
Fig. 8 is a block diagram schematically showing an exemplary arrangement of two optical transmission subsystems connected in parallel;
Fig. 9A is a diagram for explaining how to divide optical service channel (OSC) functions, showing an example of a type of dividing the functions into units by directions West and East;
Fig. 9B is a diagram for explaining how to divide optical service channel (OSC) functions, showing an example of a type of dividing the functions into units by directions of West to East and East to West;
Fig. 9C is a diagram for explaining how to divide optical service channel (OSC) functions, showing an example of a type of dividing the functions into all individual function units;
Fig. 9D is a diagram for explaining how to divide optical service channel (OSC) functions, showing an example of a type of dividing the functions into a single exchange unit.
Fig. 10 is a block diagram of an arrangement of an optical transmission system in accordance with a first embodiment of the present invention;
Fig. 11 is a block diagram of an arrangement of an optical transmission system in accordance with a second embodiment of the present invention;
Fig. 12 is a block diagram of an arrangement of an optical transmission system in accordance with a third embodiment of the present invention;
Fig. 13 is a block diagram of an arrangement of an optical transmission system in accordance with a fourth embodiment of the present invention;
Fig. 14 is a block diagram of an exemplary structure of an end terminal (ET);
Fig. 15 is a block diagram of an exemplary structure of a line amplifier (LA);
Fig. 16 is a block diagram of another exemplary structure of the end terminal;
Fig. 17 is a block diagram of another exemplary structure of the line amplifier;
Fig. 18 is a block diagram of an exemplary structure of the end terminal when two line optical fibers are provided in a vertically-separated positional relationship;
Fig. 19 is a block diagram of an exemplary structure of the line amplifier when two line optical fibers are provided in a vertically-separated positional relationship;
Fig. 20 is a diagram for explaining how to control adjustment of optical powers of light signals transmitted from a plurality of line terminal equipment on the basis of a monitor output of an optical amplifier as an end terminal;
Fig. 21 is a diagram for explaining how to control adjustment of optical powers of light signals transmitted from a plurality of line terminal equipment on the basis of a monitor output of an line optical amplifier;
Fig. 22 is a diagram for explaining how to control a light intensity adjuster provided between a plurality of line terminal equipment and a wavelength division multiplexer;
Fig. 23 is a diagram for explaining outputs of the line terminal equipment, an output of the light intensity adjuster and an output of the wavelength division multiplexer by comparing the outputs;
Fig. 24 shows an overhead part of optical carrier-3 level embedding an information transfer function between equipment; and
Fig. 25 is a diagram for explaining bit allocation of alarm indication signal (AIS) bytes.

### DESCRIPTION OF THE PREFERRED EMBODIMENTS

Explanation will first be made as to an optical transmission system for transmitting a wavelength-multiplexed light signal with use of wavelength division multiplexing/demultiplexing equipment as well as the basic concept of how to monitor or surveille the system.

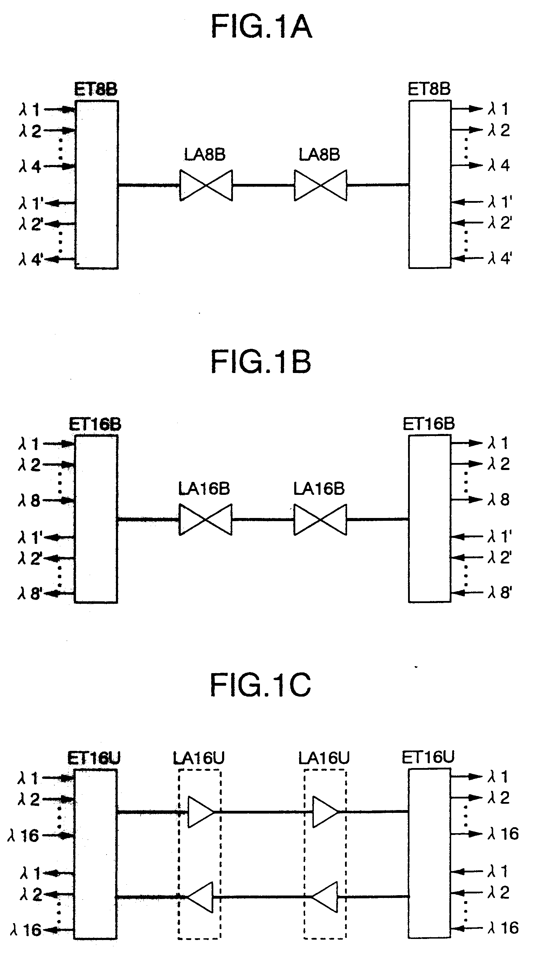

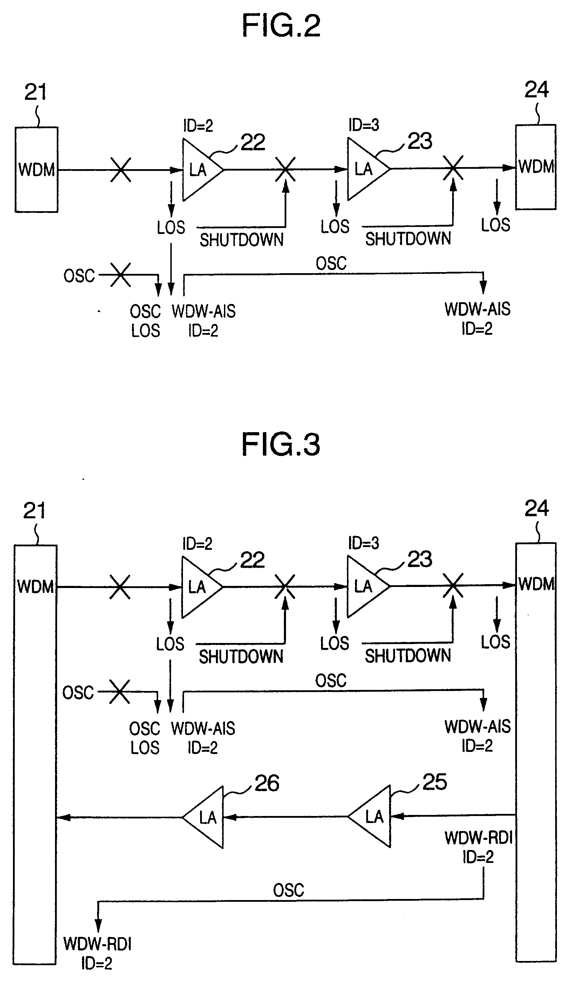

Figs. 1A to 1C show different arrangements of an optical transmission system for transmitting a multi-wavelength light signal with use of wavelength division multiplexing/demultiplexing equipment; and Figs. 2 to 6 are diagrams for explaining how to monitor or surveille transmission of fault information including a fault location to an end terminal with use of surveillance light. In Figs. 1 to 6, reference symbol ET denotes an end terminal, symbol LA denotes a line amplifier as an optical repeater, numerals 22, 23, 25 and 26 denote line amplifiers as the optical repeaters, 21 and 24 denote wavelength division multiplexing/demultiplexing equipment, and 27 denotes an OSC terminal.

There are several types of optical transmission systems depending on the multiplexing number of light signals and how to treat the light signals in an optical fiber.

A system illustrated in Fig. 1A is of a type which transmits 4 up light signals of 4 wavelengths and 4 down light signals of 4 wavelengths through a single optical fiber. The system includes end terminals (ETs) having dense wavelength division multiplexing/demultiplxing equipment (DWDM) for multiplexing transmitting light signals of wavelengths λ 1 to λ 4 (λ 1' to λ 4') received from a plurality of line terminal equipment (not shown) and for demultiplexing receive light signals of the wavelengths λ 1' to λ 4' (λ 1 to λ 4) from the line optical fiber and transmitting them to the line terminal equipment, an optical fiber connected between the two ETs, and one or a plurality of bi-directional optical repeaters or line amplifiers (bi-directional LA) inserted in the optical fiber on the way. In general, since a light signal having a single wavelength can transmit data of 10 gigabits/sec., the system of Fig. 1A can transmit data of a maximum of 40 gigabits/sec. bi-directionally. Symbol ET8B in the drawing stands for ET of bi-directional signals of 8 types of wavelengths. The same holds true even for symbol 'LA8B'.

A system shown in Fig. 1B is of a type which transmits up light signals of 8 wavelengths and down light signals of 8 wavelengths through a single optical fiber. This system has the same arrangement as the system of Fig. 1A, except that the light signals have wavelengths of λ 1 to λ 8 and λ 1' to λ 8'. And the system can transmit data of a maximum of 80 gigabits/sec. bidirectionally.

A system shown in Fig. 1C is arranged so that an exclusive optical fiber is used for each of signal transmission directions (up and down) and correspondingly line amplifiers to be inserted in the optical fibers are of a unidirectional type. The system in this example can transmit data of a maximum of 160 gigabits/sec. bidirectionally because the up and down light signals have each wavelengths of 16 wavelengths. Symbol 'ET16U' in the drawing stands for ET of unidirectional signals of 16 types of wavelengths. The same holds true even for 'LA16U'.

Explanation will next be made as to how to transmit fault information including fault location information to wavelength division multiplexing equipment within the end terminal with use of an optical service channel signal, by referring to Figs. 2 to 6.

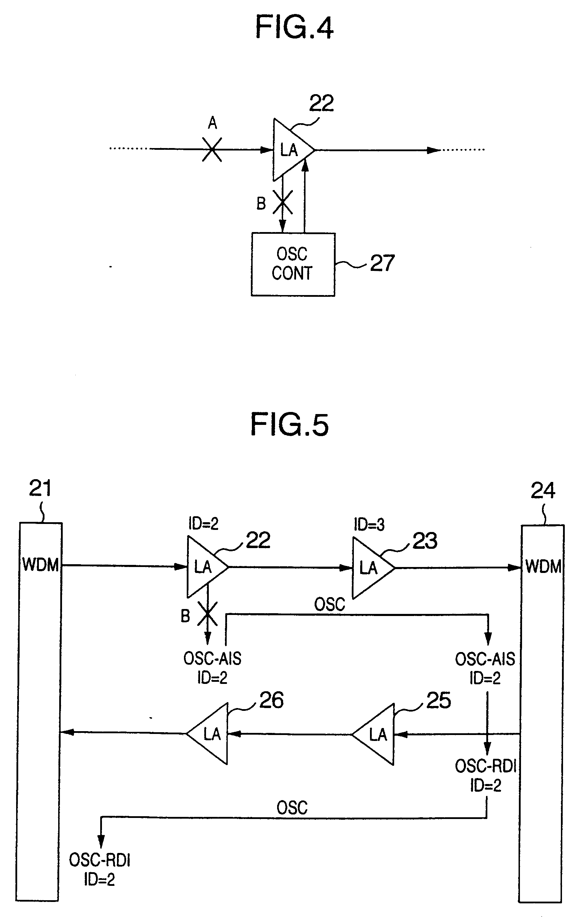

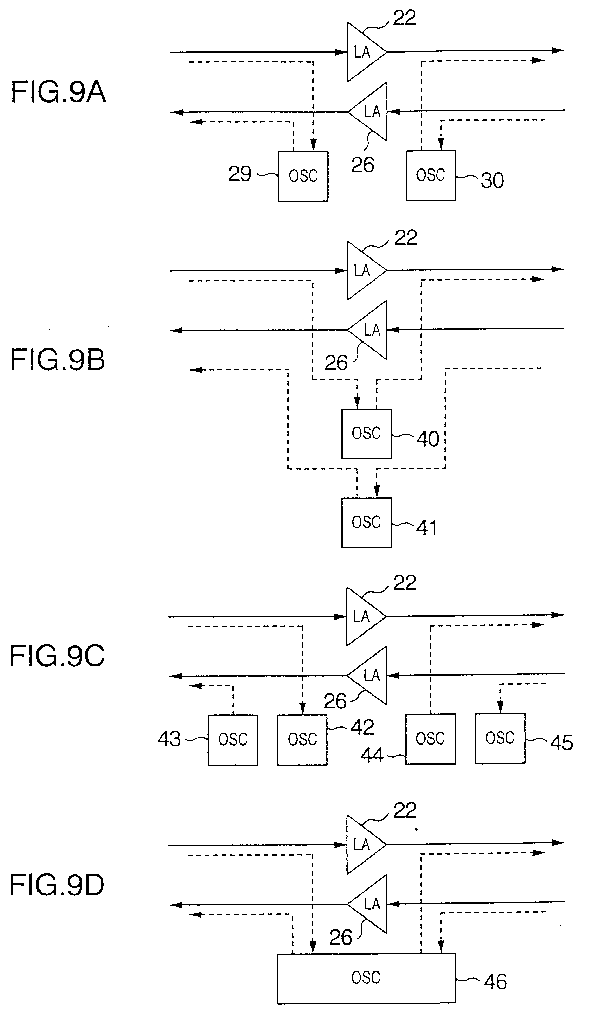

In Fig. 2, an optical service channel (OSC) signal is usually a light signal which has a wavelength different from that of a main light signal and which is used for transmission of surveillance information. The OSC signal is transmitted as wavelength-multiplexed with the main signal. However, the main signal is optically amplified at line amplifiers 22 and 23 in the form of light as it is; whereas the optical service channel signal is separated from the main light signal at the input sides of the line amplifiers 22 and 23 and photoelectrically converted at an OSC terminal 27 shown in Fig. 4 to a surveillance or service channel electrical signal. The converted service channel electrical signal provides surveillance information to surveillance information controller (not shown), is added by surveillance information on the line amplifiers 22 and 23 and then converted from the electrical signal to an optical signal by the OSC terminal 27 of Fig. 4. The converted optical service channel signal is again multiplexed with the main light signal at the output sides of the line amplifiers 22 and 23. In this connection, the structure of the above OSC terminal corresponds to the structure of Fig. 9B (to be explained later), but may be the structure of Fig. 9A, 9C or 9D.

With respect to the line amplifiers 22 and 23 inserted in the line optical fiber on the way, their identifications (Ids) are defined for distinction of the equipment. More briefly, ID numbers are allocated to the amplifiers. Assuming in Fig. 2 that there occurred a fault of a broken optical fiber between the wavelength division multiplexing equipment 21, then the line amplifier 22 having an identification number of 2 detects the broken input transmission line (or loss of signal (LOS)). Since the line amplifier 22 cannot transmit the light signal as a matter of course, it controls itself to positively shut down its output level. Similarly, the line amplifier 23 also detects a loss of signal and controls itself to positively shut down its output level. This also causes even the dense wavelength division multiplexing equipment 24 to be able to detect a loss of signal.

At the same time, the line amplifier 22 puts a wavelength division multiplexed * alarm indication signal (WDM-AIS) information defined on the optical service channel in its AID generation state, adds an identification number of 2 thereto as ID information, and transmits it downstream.

That is, in this example, an OSC input is also turned off simultaneously with the shutdown of the input transmission line as a matter of course, but which utilizes the fact that the output OSC can transmit. Eventually, the above information is transmitted down to the downstream dense wavelength division multiplexing equipment 24, which in turn can identify a location corresponding to the fault of the transmission line.

In an example of Fig. 3, in addition to the example of Fig. 2, the fault information is transmitted in the opposite direction as WDM remote defect indication (WDM-RDI) information to inform the wavelength division multiplexing equipment 21 on its upstream side in the opposite direction of the fault. Thereby, the upstream wavelength division multiplexing equipment 21 can detect the fact that the equipment cannot transmit its own output signal to the opposite side, and also can detect the fault location. Since a transmission signal is usually regarded as normal when its transmission is satisfactory in both directions and becomes useless when its transmission is satisfactory only in one of the both directions. Thus, on the basis of the above fact, various types of application operations of signals such as turning ON or OFF of the signals can be realized. This example is effective, in particular, when up and down fibers are separately provided as in the unidirectional case of Fig. 1C.

In Fig. 3, the downstream dense wavelength division multiplexing equipment 24, when receiving the WDM-AIS and fault position information (ID information), transmits the WDM-RDI and fault position information using the OSC directed in the opposite direction. As a result, the wavelength division multiplexing equipment 21 can detect the fact that an abnormality occurred in its own send side, and also can detect its fault position.

Fig. 4 is a diagram for explaining the OSC terminal 27 to the line amplifier 22 as one of the equipment of the optical transmission system. The OSC signal is usually a low-speed light signal, which connects the WDMs. And as mentioned above, the optical service channel is highly important for surveillance of the optical transmission system. For this reason, when the optical service channel becomes faulty, there is a possibility of causing the surveillance system to be operated erroneously. For example, in the examples explained in connection with Figs. 2 and 3, a fault took place in the optical fiber (at a point A in Fig. 4) carrying the OSC signal wavelength-multiplexed with the main signal. When only the OSC signal is shut down, however, it becomes necessary to consider, for example, a fault in the OSC terminal 27 or a shutdown at a point B in Fig. 4.

Fig. 5 is a diagram for explaining the operation of the system when a shutdown occurred at the point B in Fig. 4. When a line is shut down at the point B, the shutdown is detected by the OSC terminal 27. The OSC terminal 27, apart from the WDM-AIS defined on the OSC, transmits the OSC-AIS information and fault position information downstream. These information are transmitted downstream and eventually detected by the dense wavelength division multiplexing equipment 24. The equipment 24 can detect the fact that the OSC signal was shut down between the opposing wavelength division multiplexing equipment 24 and 21, and can identify its fault location. OSC-RDI in the opposite direction is similarly defined as in the WDM-AIS. Its application is also similar as in the WDM-RDI.

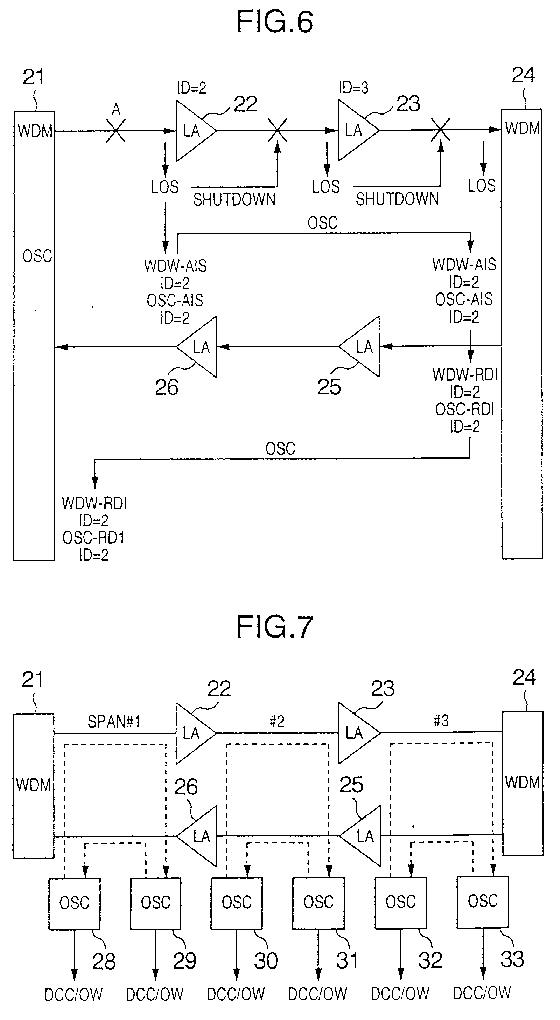

Next the overall transmitting operation of fault information based on both the WDM-AIS and OSC-AIS will be explained by referring to Fig. 6.

In Fig. 6, assuming that a fault of a broken fiber took place at a point A in a transmission line as an optical fiber. Then the line amplifier 22, when detecting the fault based on a loss of signal (LOS), transmits the WDM-AIS and OSC-AIS at the same time because the amplifier detects an OSC shutdown simultaneously with it. These are eventually detected and overall judged by the downstream dense wavelength division multiplexing equipment 24. That is, when the WDM-AIS and OSC-AIS were detected at the same location, the dense wavelength division multiplexing equipment 24 can judge it as a fiber fault; while, when only the OSC-AIS was detected, the equipment can judge it as a fault only in the OSC-associated parts.

In the foregoing optical transmission system, explanation has been briefly made in connection with the case where the OSC signals are multiplexed to surveille the entire system. With respect to the optical transmission system, it is often that such optical transmission subsystems are provided as connected in parallel as N rows. In this case, it is unnecessary to provide a plurality of OSCs. In other words, by utilizing the plurality of parallel-connected subsystems, it is possible to reduce the necessary number of OSCs. Further, when a fault in the transmission line caused a shutdown of one of the OSCs, utilization of the other OSC routes enables the surveillance network to be protected.

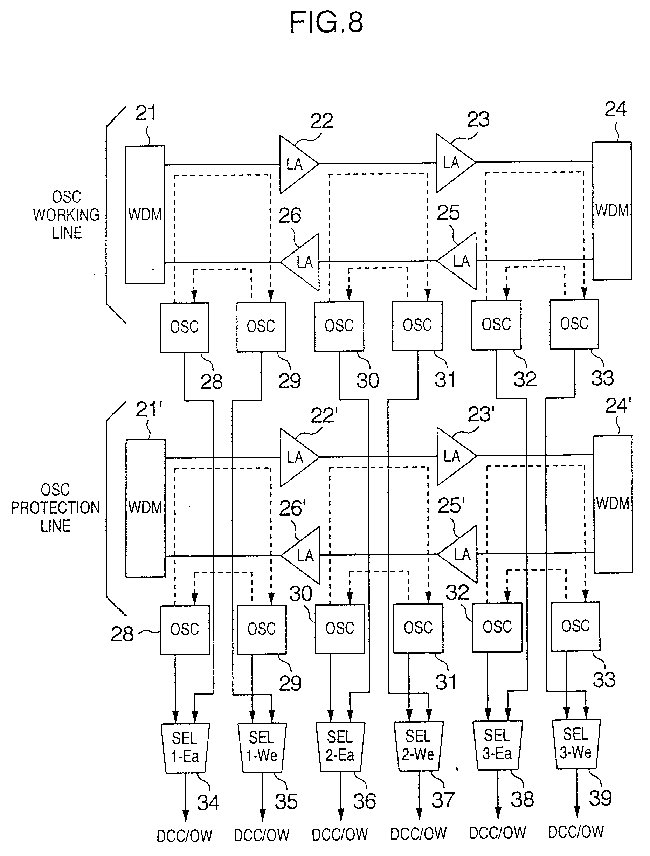

Fig. 7 is a schematic block diagram of an exemplary arrangement of an optical transmission system made up of a single system, Fig. 8 is a schematic block diagram of an exemplary arrangement of an optical transmission system made up of two subsystems connected in parallel, and Fig. 9 shows how to divide the functions of the OSC, which will be explained below. In Figs. 7, 8 and 9A-9D, reference symbols 21' and 24' denote WDMs, 22', 23', 25' and 26' denote line amplifiers (LAs), 28 to 33 and 40 to 46 denote OSC terminals, 34 to 39 denote selectors (SELs), and the other numerals and symbols are the same as those in Figs. 2 to 6.

In the example of Fig. 7, the optical transmission system is made up of only a single system, in which case only one OSC is provided and a preliminary channel for the OSC is not provided. And the OSC terminal 28 is provided at input/output sides of the wavelength division multiplexing equipment 21, OSC terminals 29 and 30 are provided at input/output sides of the line amplifiers 22 and 26, the OSC terminals 31 and 32 are provided at input/output sides of the line amplifiers 23 and 25, and the OSC terminal 33 is provided at input/output sides of the dense wavelength division multiplexing equipment 24. With such a structure, OSC signals are transmitted as multiplexed with the main light signal in spans between the WDMs and line amplifiers and between line amplifiers. The functions of the OSC terminals 28 to 33 include, as their major functions, provision of a data communication line called a data communication channel (DCC) (which is used for surveillance information transfer between equipment) and provision of a telephone line for operator communication called an order wire (OW).

When the optical transmission system is made up of two optical transmission subsystems connected in parallel as shown in Fig. 8, the main signal is provided for each of two independent subsystems while an OSC working line and a backup OSC protection line are provided for OSCs. And for the OSC change-over function, a selector function is provided for each equipment. The example of Fig. 8 shows a most general selector function and respective selector circuits denoted by span numbers as SEL 1-Ea,...

In Figs. 7 and 8, the OSC terminals are divided as to transmit signals in each span. However, there may be considered several methods of dividing the functions of the OSC terminals, including a method of dividing the functions into printed circuit board package units as shown in Fig. 9. And optimum one of the ways of controlling the selector circuits of Fig. 8 corresponding to the division method is determined. This is because the printed circuit board package unit corresponds to an equipment exchange unit at the time of a fault.

Figs. 9A-9D explain how to divide OSC functions, in which Fig. 9A is an example of a type of dividing the OSC functions into units by directions of West and East, Fig. 9B is an example of a type of dividing the functions into units by directions of West to East and East to West, Fig. 9C is an example of a type of dividing the functions into all individual function units, and Fig. 9D is an example of a type of dividing the functions into a single exchange unit. These function division methods are determined by conditions of circuit scales of the OSCs or by operational conditions when a package is removed.

According to the structures of Figs. 9A to 9D, how to operate the respective selectors in Fig. 8 is determined. This is called a protection mode, which includes an each-span, bi-directional, protection mode suitable for the structure of Fig. 9A, an all-span unidirectional protection mode suitable for the structure of Fig. 9B, an each-span unidirectional protection mode suitable for the structure of Fig. 9C, and an all-span bi-directional protection mode suitable for the structure of Fig. 9D.

For example, in the each-span bi-directional protection mode of Fig. 9A suitable for the case where the optical service channels are provided for the directions of West and East, change-over between the respective spans is made independent of each other. In each span, however, change-over between working and protection is carried out simultaneously with the selectors of the opposing OSC. In this case, the opposing equipment is required to be switched as communicated with the opposite side via the span when a fault is detected in any of the transmission line. To this end, communication channels are defined on the OSC.

For example, the above definition are two levels of faults, that is, a signal failure (SF) (signal shutdown: broken transmission line or out-of-frame-synchronism) and signal degrade (SD) (degradation in signal or error rate). With respect to the equipment opposed to each other via the span, one of the equipment always informs the opposite equipment of an alarm (SF, SD, working/protection) detected by its own. Each equipment compares the both alarms received from the opposing side and detected by its own, judges a selector line, and switches between the working and protection. The above notification to the opposite side is carried out when the OSC-SF and OSC-SD are detected by returning the OSC-SF-RDI and OSC-SD-RDI to the span-opposed side.

Explanation has been made in connection with the case of the each-span protection mode in the foregoing example. In the all-span protection mode, however, such information transfer for each span becomes unnecessary. Instead, OSC-SF, SD, etc. are defined commonly to all spans to be used between the opposing WDMs. For example, in the all-span bi-directional protection mode, the WDM judges a selector channel in the same manner as the above and transmits selector information to the line amplifier to execute simultaneous switching of all the equipment.

The aforementioned OSC can employ a frame structure of synchronous optical network optical carrier - N level (SONET OC-N) having a frame format of, e.g., SONET OC-3 level (155.52 megabits/sec.).

Merits of employing this frame format are:
(1) Information to be communicated with the OSC includes data communication channel (DCC) and order wire (OW), and the employment of the SONET frame structure enables use of LSI or overhead processing circuit configuration developed by SONET as it is.
(2) The circuit configuration can be used as common one and even the service channel configuration can be used as common one in a substantially similar manner.
(3) Since such a communication capacity as sufficient as 156 megabits/sec even in future can be secured, this facilitates function extension.
(4) When it is desired to expand an OSC surveillance optical network including the SONET equipment, an already-developed OC-3 package can be easily accommodated, in particular, in the SONET side equipment, with a secured compatibility.

A surveillance network using a data communication channel (DCC) is usually employed between the SONET equipment. When it is desired to integrate a WDM network with the surveillance network, however, the OSC is connected in a wavelength multiplexed manner between the WDM and SONET equipment. In this case, a OC-3 card having the similar structure to the above but different wavelengths can be mounted in the SONET equipment, and its connection can be easily realized with use of its DCC.

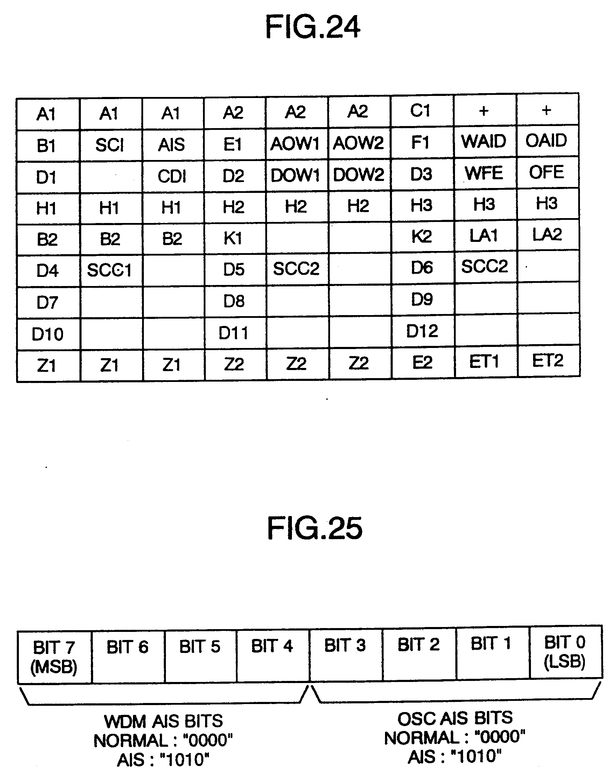

Explanation will then be made as to a surveillance method in accordance with an embodiment of the present invention with reference to Figs. 24 and 25. Fig. 24 shows an overhead part of OC-3 (synchronous transport signal- 1 level (STM-1)) embedding information transfer function between the equipment. In this example, a combination of one alphabet and a number such as A1 byte is a byte for synchronization defined by SONET or synchronous digital hierarchy (SDH) specifications. In the present invention, with use of idle bytes in the overhead part, transfer information between the end terminals as well as transfer information between all equipment are transmitted. The transfer information between the end terminals include, in addition to line DCC using D4-D12 bytes determined by the specifications, SCI (system configuration indicator), CDI (channel down indicator) (LOS detection number transfer function), ET1 and ET2. The transfer information between all the equipment include, in addition to section DCC using D1-D3 bytes determined by the specifications, AIS (line failure transfer function), analog OW1 (AOW1) and AOW2 (2 channels), digital OW1 (DOW1) and DOW2 (2 channels), WDM AIS generation ID (WAID), OSC AIS generation ID (OAID), WDM far end receive error (WEF), OSC far end receive error (OFE), SCCI1 to SCCI3 (supervisory control channel), LA1 and LA2 (preliminary).

Fig. 25 shows specific bit allocation of an AIS byte. Upper 4 bits of the AIS byte indicate WDM AIS bits, lower 4 bits thereof indicate OSC AIS bits. "0000" in the upper 4 bits indicates its normal state, while "1010" therein indicates an AIS generation state. The equipment in detecting a fault allocates it to WDM AIS and OSC AIS according to the fault condition and transmits it to its downstream equipment.

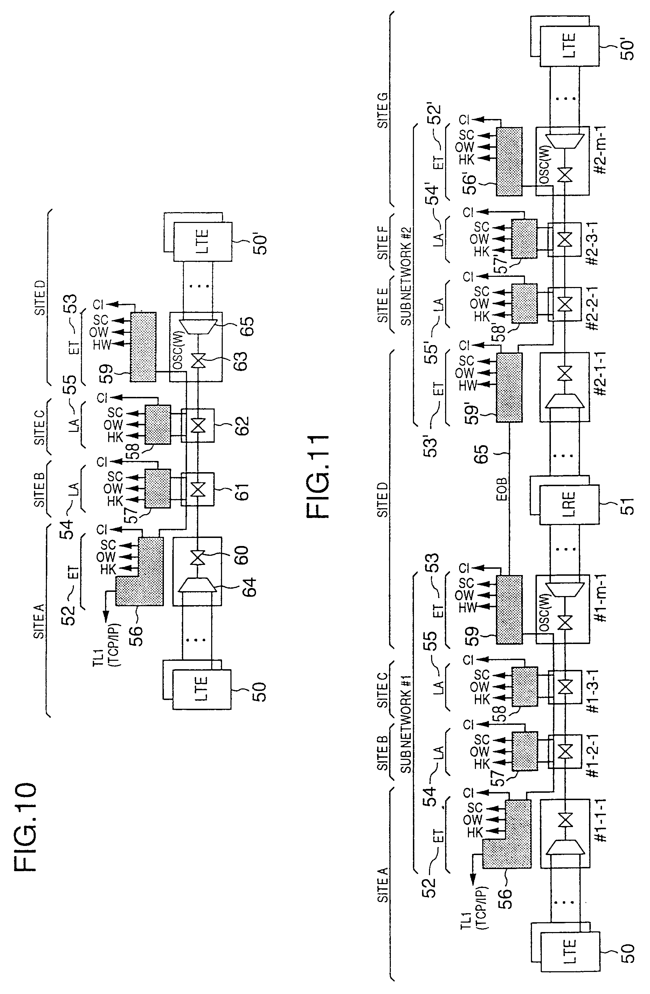

Fig. 10 is a block diagram of an arrangement of an optical transmission system in accordance with another embodiment of the present invention. In Fig. 10, 50 and 50* denote line terminal equipment (LTEs), 52 and 53 denote end terminals (ETs), 54 and 55 denote bi-directional optical repeaters (Las), 56 to 59 denote supervisory controllers, 60 to 63 denote bi-directional optical amplifiers, and 64 and 65 denote wavelength division multiplexing equipment (WDMs).

The optical transmission system of Fig. 10 according to the embodiment of the present invention, which has a minimum configuration, includes the ET 52 and ET 53, an optical fiber connected between the two ET 52 and ET 53, and one or a plurality of LA 54 and LA 55 inserted in the optical fiber. The ET 52 and ET 53 have the WDMs 64 and 65 and the bi-directional optical amplifiers 60 and 63 for multiplexing transmitting light signals having a plurality of wavelengths received from a plurality of LTEs 50 and 50', demultiplexing light signals received from line optical fibers, and then sending them to the LTEs 50 and 50', respectively. The configuration is the same as that explained in connection with Figs. 1A and 1B.

In the system of Fig. 10, further, the ET 52, ET 53, LA 54 and LA 55 are provided with the supervisory controllers 56 to 59, respectively. These supervisory controllers 56 to 59 correspond each to a combination of the OSC terminal and control circuit explained in connection with Figs. 5 to 9. In the example of Fig. 10, however, since the main signal is transmitted bi-directionally, the OSC signals transferred between the supervisory controllers have different wavelength and are transmitted bi-directionally.

In Fig. 10, light signals of different wavelengths from a plurality of LTEs 50 are wavelength-multiplexed by the WDM 64 within the ET 52, amplified by the bi-directional optical amplifier 60 up to a predetermined output level, and the transmitted onto the line optical fiber. The wavelength-multiplexed light signal transmitted through the line optical fiber is amplified by the LA 54 and LA 55 to compensate for its attenuation in the fiber, and then received by the ET 53. The light signal received by the ET 53 is amplified by the bi-directional optical amplifier 63 to a predetermined level, wavelength-demultiplexed by the WDM 65, and then sent to a plurality of LTEs 50'. Similarly, light signals from the plurality of LTEs 50' are transmitted to the plurality of LTEs 50 through the same optical fiber but in a direction opposite to the above. In the foregoing explanation, the light signals used for transmission in both directions are set to have different wavelengths.

The supervisory controllers 56 to 59 act to supervise a fault in the equipment of the system, a failure in the fibers, etc. To this end, the supervisory controllers 56 to 59 transmit and receive the OSC signal as a surveillance light signal between the equipment of the system. The supervisory controllers 56 to 59 each function to once convert the received OSC signal to an electrical signal to establish various interfaces, and to superimpose a signal to be sent on the OSC signal and then transmit it to the adjacent equipment.

Each of the supervisory controllers 56 to 59 is provided, as common interfaces, with a house keeping (HK) function for inputting/outputting an alarm to a floor on which the controller is placed, an order wire (OR) as an analog telephone line for a maintenance operator, a service channel (SC) for operator contact using a digital signal with the other equipment, and a craft interface (CI) for input/output of system states to a personal computer or the like. The supervisory controller 56 provided to the ET 52 is provided with an interface transaction language one (TL1) for operator's surveillance of the entire system.

Although the line for passage of the OSC signal has been illustrated as separated from the optical fiber for passage of the main signal in the example of Fig. 10 for simplicity of the drawing, the OSC signal is also actually wavelength multiplexed in the optical fiber for passage of the main signal.

In the equipment having the respective supervisory controllers therein, the supervisory OSC signal is demultiplexed from the main signal or multiplexed therewith. In the system of Fig. 10, a maximum number of 16 (8 x 2) of line terminal equipment can be provided.

Fig. 11 is a block diagram of an optical transmission system in accordance with another embodiment of the present invention. In Fig. 11, 52' and 53' denote end terminals (ETs), 54' and 55' denote line amplifiers (Las), 56' to 59' denote supervisory controllers, 51 denotes a line regenerator equipment (LRE), 65 denotes an enhanced OSC bus (EOB), and other numerals or symbols are the same as those in Fig. 10.

In the system of Fig. 10, the light signal as the main signal is not converted to an electrical signal but relayed through the wide-range optical amplifiers and, even when the transmission line is made up of two line amplifiers and a three-span optical fiber, it is impossible to set its actual transmission distance to be 270 km or more.

Meanwhile, the second embodiment of Fig. 11, which can set its transmission distance to be 270 km or more, is made up of two of the system of Fig. 10 connected in parallel through the LREs 51. With this arrangement, it is possible to transmit a signal up to 540 km. The LREs 51 connecting the two subsystems have a function of once demultiplexing all the light signals wave-multiplexed to electrical signals, to compensate for signal degradation according to the states of the electrical signals, and then carry them on a light signal.

In the above arrangement of Fig. 11, the ETs 53 and 53' and the LRE 51 are installed in the same location within the same terminal house. In the embodiment of Fig. 11, further, it is necessary to manage the entire subsystems as a single system, to which end the EOB 65 for transmission of only the OSC signal is provided between the supervisory controllers 59 and 59' of the Ets 53 and 53'. Accordingly, even in this embodiment, it is possible to supervise all the equipment of the system of Fig. 11 through the EOB 65.

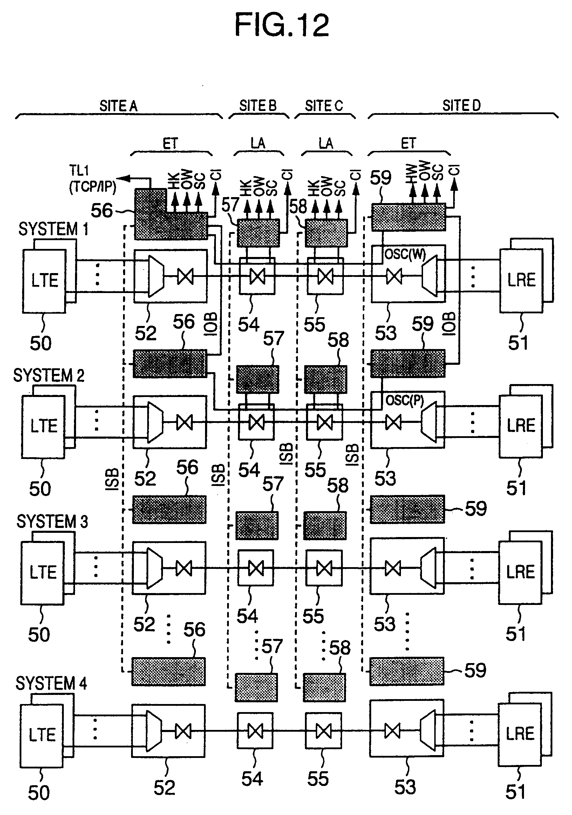

Fig. 12 is a block diagram of an arrangement of an optical transmission system in accordance with a further embodiment of the present invention. This embodiment is made up of 4 of the system of Fig. 10 connected in parallel as 4 channels. Therefore, each of subsystems 1, 2, 3 and 4 is exactly the same as that of Fig. 10 and thus respective equipment in each system are denoted by the same reference numerals or symbols as those of Fig. 10. However, for simplicity of the drawing, reference numeral 52, which has been used to indicate an ET, is used to indicate a wavelength division multiplexing equipment and bi-directional optical amplifier in each of the subsystems 1, 2, 3 and 4. Similarly, numerals 53 to 55 are used to denote individual transmission equipment parts except for the supervisory controllers.

The arrangement of the embodiment is featured in that the supervisory controllers 56 to 59 and OSC signals transferred between these controllers in the system 1 are used for a current system; whereas the supervisory controllers 56 to 59 and OSC signals transferred between these controllers in the system 2 are used as preliminary ones, to supervise the entire system of the 4 systems using the two systems. To this end, an optical fiber called an intra-site OSC bus (IOB) is provided between the supervisory controllers 56 and 57 provided in the transmission equipment 52 and 53 of the system 1 and system 2. Further provided between the supervisory controllers 56 to 59 in each system are electrical connection lines called intra-site buses (ISBs). In this case, the IOB for the LA is omitted for simplicity.

In such a system as arranged as mentioned above, when the current supervisory controllers in the system 1 are normally operated, the supervisory controllers 56 to 59 of the subsystems 2 to 4 report such a surveillance result as a fault in their own to the corresponding equipment of the current system through the ISB, and transmission of these surveillance information in the direction of the main signal is carried out by the supervisory controller of the current system in the form of electrical signal. When the supervisory controller of the current system becomes impossible to use due to its failure, the preliminary supervisory controller of the system 2 in place of the current system continues to supervise the entire system through the IOB. In this connection, the OSC signals used in the current and preliminary subsystems have an identical wavelength in each transmission direction.

Since the foregoing embodiment can have two of the current and preliminary subsystems as the supervisory controller system, the entire system can be improved in reliability. Further, since it is unnecessary to use the supervisory controller in each system in a perfect form, its costs can be reduced.

Though the foregoing embodiment has been arranged so that the four subsystems are arranged in parallel to increase an overall signal transmission capacity, this embodiment may be arranged so as to have two or three or a larger number of subsystems connected in parallel.

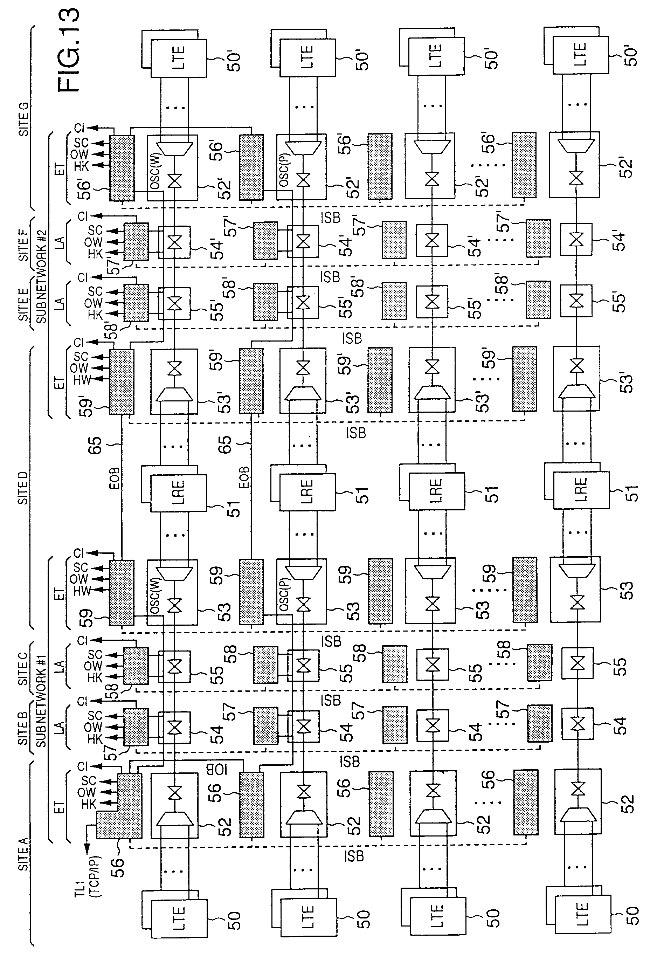

Fig. 13 is a block diagram of an arrangement of an optical transmission system in accordance with yet another embodiment of the present invention. This embodiment is made up of 4 of the system of Fig. 11 connected in parallel. Each of the subsystems 1 to 4 has exactly the same arrangement as the system of Fig. 11 and therefore, the respective equipment in each system are denoted by the same reference numerals or symbols as those of Fig. 11. For simplicity of the drawing, however, numerals 52 to 55 are used to denote individual transmission equipment parts except for the supervisory controllers.

The embodiment of Fig. 13, which can provide a long transmission distance as in the embodiment of Fig. 11, is made up of 8 subsystems each corresponding to the system of Fig. 10, 4 pairs of which are connected in parallel, each pair being connected in series. This arrangement enables the embodiment to have a transmission distance of up to 540 km. And the EOB 65 is provided only between the two supervisory controllers 59 and 59* of the current and preliminary subsystems 1 and 2.

The embodiment as arranged as mentioned above can have effects corresponding to a combination of the effects of two embodiments of Figs. 11 and 12. This embodiment, as in Fig. 12, may be arranged to have two or three subsystems connected in parallel or a larger number of subsystems connected in parallel.

Explanation will next be made as to various examples of structures of the ET and LA usable in the systems of the embodiments of the invention.

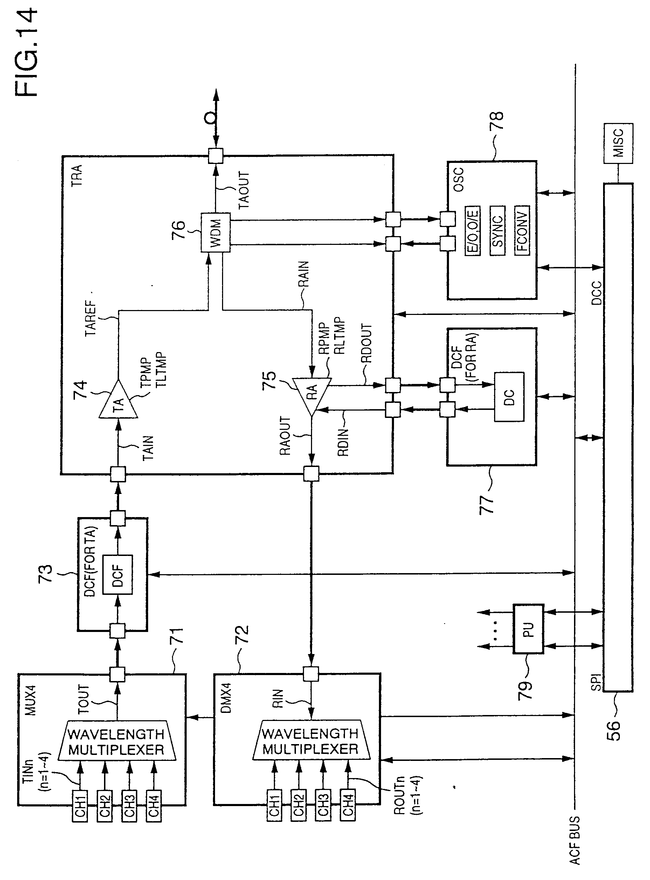

Fig. 14 is a block diagram showing an exemplary arrangement of the end terminal (ET), in which case the ET treats 4 channels for each of the East and West directions, that is, a total of 8 channels of light signals of 8 wavelengths. In Fig. 14, 71 denotes a wavelength division multiplexing equipment, 72 denotes a wavelength division demultiplexing equipment, 73 and 77 denote transmission characteristic compensatory, 74 denotes a transmitting optical amplifier, 75 denotes a receiving optical amplifier, 76 denotes a wavelength demultiplexer/multiplexer, 78 denotes an OSC terminal, and 79 denotes a power supply. In the drawing, parts enclosed by thick lines are each arranged in respective actual equipment as a single printed circuit board package, and the same holds true even in other examples which will be explained later. Symbols shown in the drawing denote the names of signals to be monitored at their illustrated positions. In other words, for simplicity of the drawing, though omitted in the drawing, a temperature measuring element, a branching coupler and a monitoring photo diode (PD) are actually provided at the respective monitoring points. The same holds true even in drawings which will be explained later.

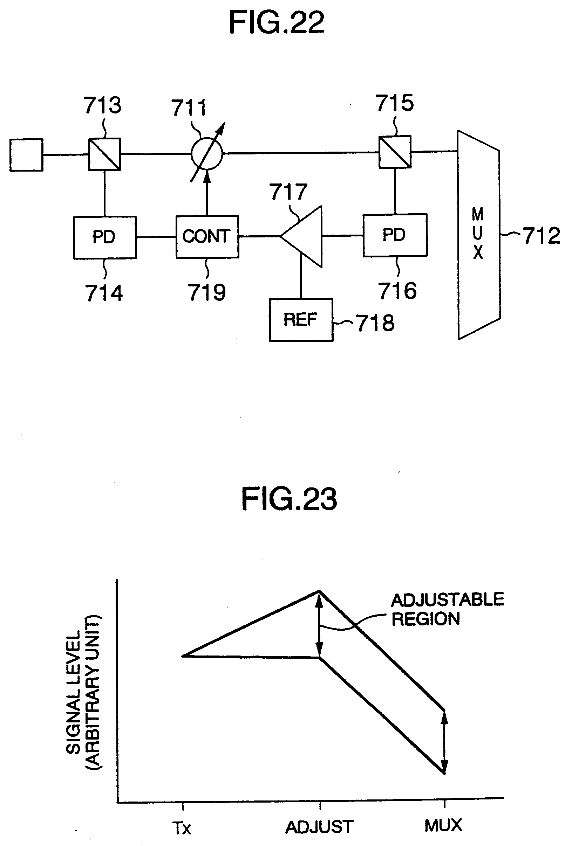

The wavelength division multiplexing equipment 71 multiplexes light signals of different wavelengths received from 4 LTEs via input terminals as CH1 to CH4 into a multiplexed signal, and then transmits the multiplexed signal to the transmission characteristic compensator 73. The wavelength division multiplexing equipment 71 also has a function of adjusting the received light signals in such a manner that powers of the signals are balanced. The transmission characteristic compensator 73 includes an optical fiber known as a dispersion compensation fiber (DCF) which compensates for the transmission characteristics of the line optical fiber and which has a dispersion characteristic having a sign opposite to the dispersion characteristic of the line optical fiber. In this connection, the transmission characteristic compensator may be of another type such as a Bragg Grating type or be another transmission characteristic compensator. As will be explained later in detail in connection with Fig. 22, a 10:1 optical coupler 713 and an input monitor 714 are provided between an LTE and a wavelength division multiplexer 712, the ET can automatically detect the presence of a faulty LTE and can inform the entire transmission system of its wavelength-multiplexing number information through the optical service channel.

An light signal issued from the transmission characteristic compensator 73 is amplified by the transmitting optical amplifier 74 to a predetermined level, and output onto the line optical fiber via the wavelength demultiplexer/multiplexer 76 to be transmitted to a later stage of LA. At this time, the transmitting optical amplifier 74, using the wavelength-multiplexing number information, automatically controls its gain according to the light signal multiplexing number to set the light signals at a constant level. The wavelength demultiplexer/multiplexer 76 has a function of multiplexing the transmitting light signal received from the transmitting optical amplifier 74 with a surveillance light signal and outputting a multiplexed light signal to the line optical fiber, and also has a function of demultiplexing a light signal received from the line optical fiber to extract the surveillance light signal therefrom.

The receive light signal separated by the wavelength demultiplexer/multiplexer 76 is sent to the wavelength division demultiplexing equipment 72 via the receiving optical amplifier 75 including two stages of optical amplifiers, demultiplexed into light signals of wavelengths for the LTEs, and then transmitted to the respective LTEs. Connected between the two stages of optical amplifiers is the transmission characteristic compensator 77 to compensate for the characteristics of the received light signals fluctuated due to the characteristics of the line optical fiber.

Meanwhile, the OSC terminal 78, which includes an optical receiver, a light/electricity converter, an optical transmitter, an electricity/light converter and so on, carries the surveillance light signal on the surveillance information received from the supervisory controllers 56 to 59 and sends it to the wavelength demultiplexer/multiplexer 76 and further to the LA. Further, the surveillance light signal from the LA side is demultiplexed by the wavelength demultiplexer/multiplexer 76 , but the OSC terminal 78 receives the demultiplexed surveillance light signal and outputs it to the supervisory controller 56 as an electrical signal.

The supervisory controller 56 and a package containing the aforementioned functions already explained above are electrically connected by means of a control line called an agent communication BUS (ACF BUS) so that the supervisory controller 56 monitors the level of the light signal at each monitoring point within the package to control the power levels of the light signals in the input/output channels. Further, optical powers at input/output sides of the optical amplifiers, wavelength division multiplexing equipment, wavelength division demultiplexing equipment and wavelength division multiplexing/demultiplexing equipment; and driving currents, exciting light powers and element temperatures of exciting laser diodes of the respective optical amplifiers can be remote-controlled at any site through the OSC.

Interfaces between the above supervisory controllers and packages accommodating the respective functions as well as symbols shown are the same as those even in other drawings which will be explained later. The power supply 79 supplies various types of powers having voltages necessary for operating the above function parts. Power supplies in the other equipment to be explained later are also the same as the above.

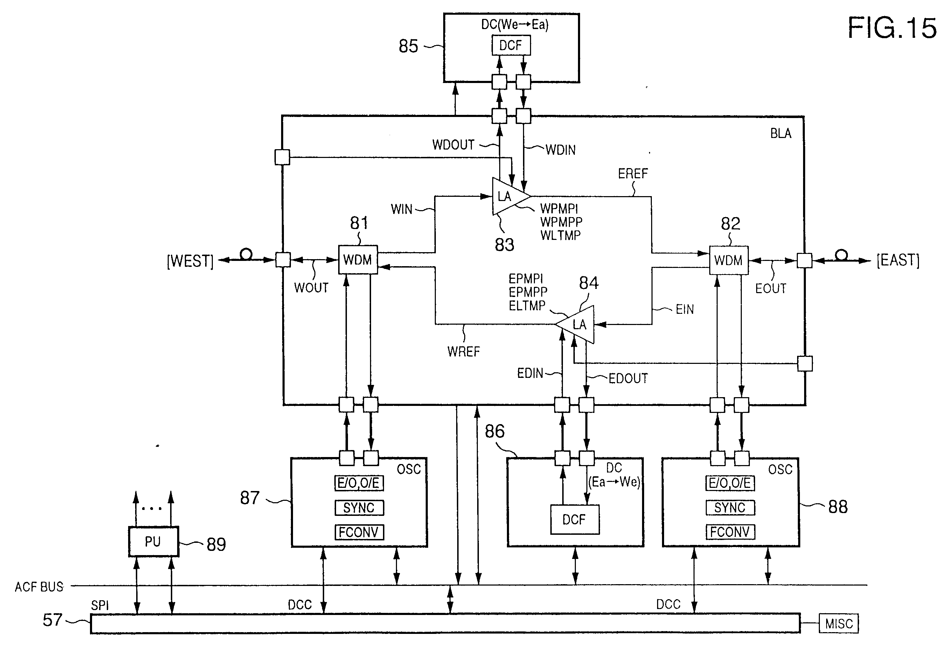

Fig. 15 is a block diagram of an exemplary arrangement of the LA, which treats 4 channels of light signals for each of the East and West directions, that is, a total of 8 light signals of 8 wavelengths. In Fig. 15, 81 and 82 denote wavelength division multiplexing/demultiplexing equipment, 83 and 84 denote optical amplifiers, 85 and 86 denote transmission characteristic compensators, 87 and 88 denote OSC terminals, and 89 denotes a power supply.

In Fig. 15, the wavelength division multiplexing/demultiplexing equipment 81 and 82 have a function similar to that of the wavelength demultiplexer/multiplexer 76 already explained in Fig. 14. The wavelength division multiplexing/demultiplexing equipment 81 demultiplexes the light signal from the line optical fiber shown by 'West' in the drawing and outputs it to the optical amplifier 83. The optical amplifier 83 is made up of two stages of optical amplifiers similarly to the receiving optical amplifier 75 already explained in Fig. 14, and the transmission characteristic compensator 85 is connected between the two stages of optical amplifiers. Accordingly, the structure of the optical amplifier 83 and transmission characteristic compensator 85 has the same function as the structure of the receiving optical amplifier 75 and transmission characteristic compensator 77 in Fig. 14, that is, can compensate for the transmission characteristics of the line optical fiber. The light signal having the compensated transmission characteristics is output to the optical fiber of the East side through the wavelength division multiplexing/demultiplexing equipment 82.

Similarly to the above, the wavelength division multiplexing/demultiplexing equipment 82 demultiplexes the light signal from the line optical fiber of the side shown by 'East' in the drawing and outputs it to the optical amplifier 84. The optical amplifier 84, similarly to the optical amplifier 83 , is also made up of two stages of optical amplifiers and the transmission characteristic compensator 86 is connected between the two stages of optical amplifiers. Thus the transmission characteristics of the line optical fiber can be compensated for and the light signal having the compensated transmission characteristics can be output from the East side to the optical fiber of the West side via the wavelength division multiplexing/demultiplexing equipment 81. In this connection, the optical amplifiers 83 and 84, using the light signal multiplexing number (wavelength multiplexing number) information transmitted form the upstream side and contained in the surveillance light, automatically control their gains according to the light signal multiplexing number to keep the light levels of the light signals constant.

The LA shown in Fig. 15, which has such a structure as mentioned above, can amplify the light signal bi-directionally, and compensate for the transmission characteristics of the line optical fiber for relay.

The OSC terminals 87 and 88 have a function similar to the OSC terminal 78 already explained in Fig. 14. The OSC terminal 87 performs transfer of the light signal with the optical fiber of the East side, while the OSC terminal 88 performs transfer of the light signal with the optical fiber of the East side.

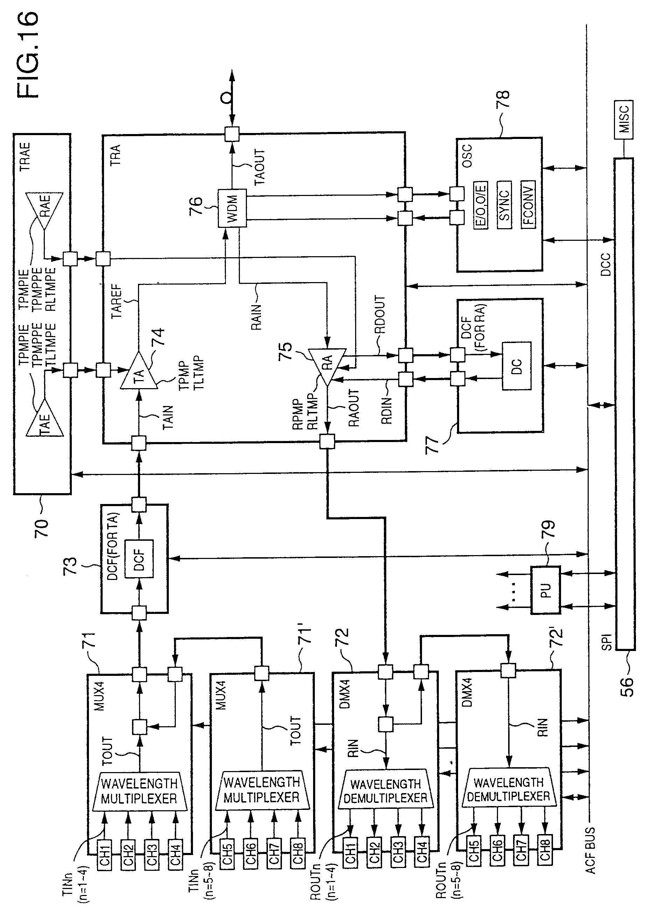

Fig. 16 is a block diagram of another exemplary arrangement of the ET, which treats 8 channels of light signals in each of the East and West directions, that is, a total of 16 channels of light signals of 16 wavelengths. In Fig. 16, 70 denotes an exciting light source, 71' denotes a wavelength division multiplexing equipment, 72' denotes a wavelength division demultiplexing equipment, and the other symbols and numerals the same as those in Fig. 14.

The ET of Fig. 16 has substantially the same arrangement as the ET explained in Fig. 14. And this arrangement of Fig. 16 is largely different from that of the ET of Fig. 14, in that, since this example treats 8 channels of light signals in each of the East and West directions; the wavelength division multiplexing equipment 71' and wavelength division demultiplexing equipment 72' are added, and the light signal wavelength-multiplexed from the wavelength division multiplexing equipment 71' is further multiplexed in the wavelength division multiplexing equipment 71 with the light signal wavelength-multiplexed in the wavelength division multiplexing equipment 71; and in that the wavelength division demultiplexing equipment 72 demultiplexes the light signals into the wavelength division multiplexed light signal to its own and the wavelength division multiplexed light signal to be transferred to the wavelength division demultiplexing equipment 72'.

The ET must wavelength-multiplex 8 channels of light signals of 8 different wavelength for each of the East and West directions and carry its multiplexed signal onto the optical fiber. This requires optical power twice as large as the case of the 4 wavelength multiplexing having the same optical power for each wavelength. To this end, exciting light signal is supplied from the exciting light source 70 to the transmitting optical amplifier 74 and receiving optical amplifier 75 to increase the optical output levels of the amplifiers 74 and 75.

The ET of Fig. 16 has exactly the same arrangement as the ET explained in Fig. 14 except for the above structure and operates in exactly the same manner as the ET of Fig. 14. Accordingly explanation thereof will be omitted herein.

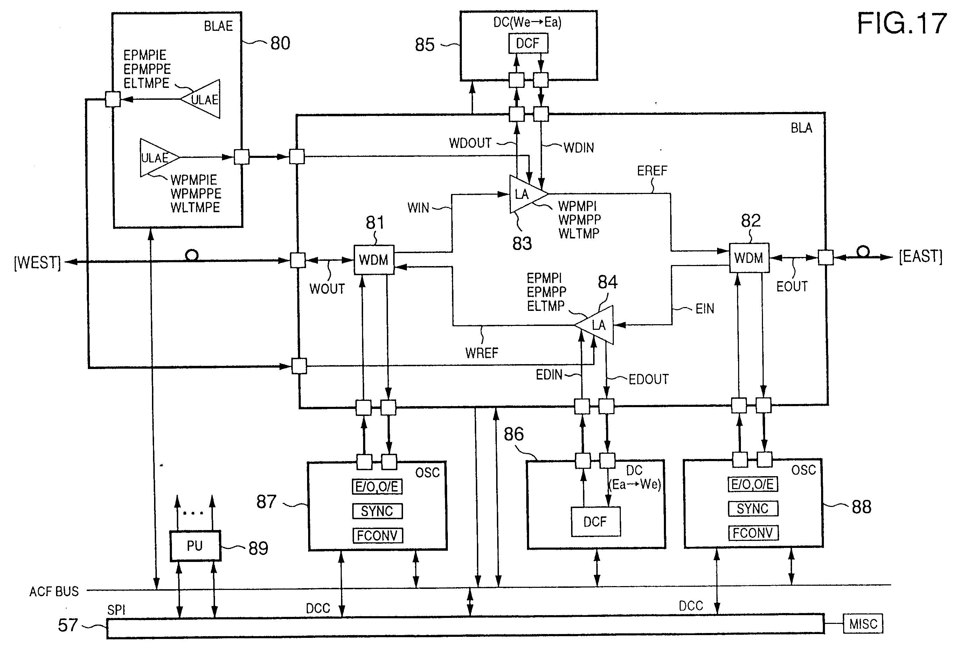

Fig. 17 is a block diagram of another exemplary arrangement of the LA, which treats 8 channels of light signals in each of the East and West directions, that is, a total of 16 light signals of 16 wavelengths. In Fig. 17, 80 denotes an exciting light source and other symbols and numerals are the same as those in Fig. 15.

The LA of Fig. 17 has exactly the same arrangement as that of LA explained in Fig. 15, except that the exciting light source 80 to the optical amplifiers 83 and 84 is provided in another package. This LA must multiplex 8 channels in each of the East and West directions with respect to wavelength, that is 8 light signals of 8 different wavelengths, amplify the multiplexed light signal transmitted onto the optical fiber by the optical amplifiers 83 and 84 for relay. To this end, as in the ET explained in Fig. 16, an exciting light signal is supplied from the exciting light source 80 to the optical amplifiers 83 and 84 to increase the optical output levels of the amplifiers 83 and 84.

The examples of the ET and LA explained in connection with Figs. 14 to 17 have been explained in connection with the case where multiplexed light signal is transmitted through a single line optical fiber bi-directionally. Explanation will next be directed to examples of the ET and LA where the line optical fibers are separately provided for East and West directions to transmit a multiplexed light signal of 16 wavelengths through each optical fiber.

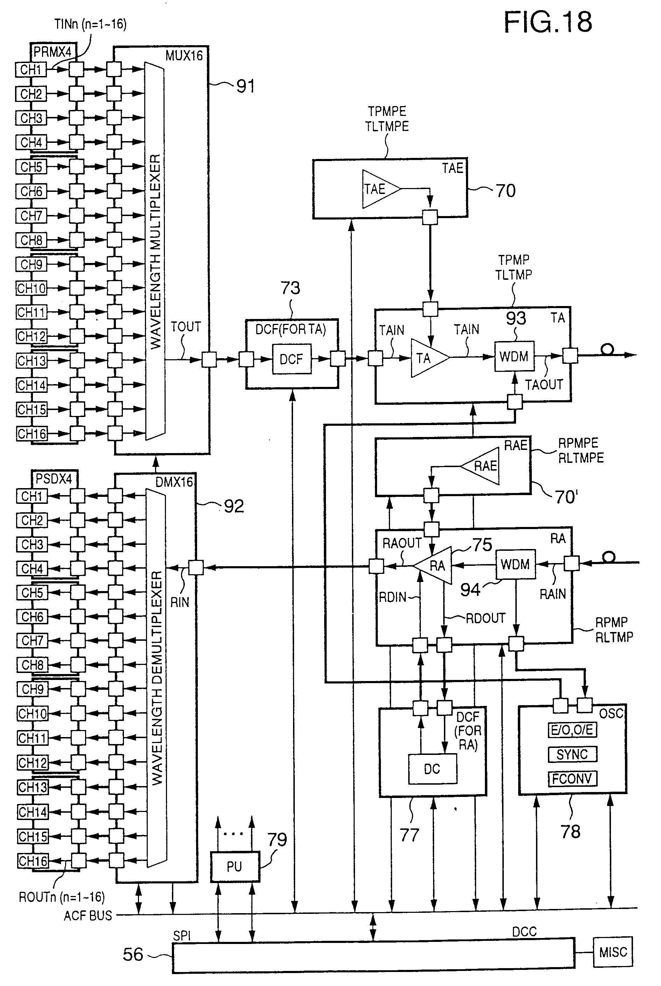

Fig. 18 is a block diagram of an exemplary arrangement of the ET when line optical fibers are provided separately for the East and West directions. In Fig. 18, 70* denotes an exciting light source, 91 denotes a wavelength division multiplexing equipment, 92 denotes a wavelength division demultiplexing equipment, 93 and 94 denote wavelength division multiplexing/demultiplexing equipment, and other symbols and numerals are the same as those in Fig. 16.

The ET of Fig. 18 is arranged so as to provide line optical fibers separately for the East and West directions, and has basically the same arrangement as that of the ET explained in Fig. 16. That is, in Fig. 18, light signals of 16 wavelengths received from a line terminal equipment are multiplexed by the wavelength division multiplexing equipment 91 for 16-wavelength multiplexing through an input monitor (not shown) provided in an input interface. At this time, the ET can automatically detect the presence of a not-used or faulty LTE and can inform the entire transmission system of its wavelength-multiplexing number information via the OSC. An output light signal of the wavelength division multiplexing equipment 91 is input to the transmitting optical amplifier 74 through the transmission characteristic compensator 73. The transmitting optical amplifier 74, which is applied with an exciting light signal from the exciting light source 70, controls the input light signal in such a manner as to output a light signal having a predetermined optical power level. More specifically, the transmitting optical amplifier 74, using the light signal multiplexing number (wavelength multiplexing number) information detected by the input monitor, automatically controls its gain according to the light signal multiplexing number to keep the optical levels of the light signals constant. The optical output of the transmitting optical amplifier 74 is multiplexed with the surveillance light signal received from the OSC terminal 78 by the wavelength division multiplexing/demultiplexing equipment 93 and then sent to the line optical fiber of the transmission side.

Meanwhile, a light signal received from the line optical fiber of the receive side is demultiplexed by the wavelength division multiplexing/demultiplexing equipment 94 to obtain the surveillance light signal, and the surveillance light signal is applied to the OSC terminal 78. A 16-wavelength multiplexed main signal is compensated for the transmission characteristics by the transmission characteristic compensator 77, and is also input to the wavelength division demultiplexing equipment 92 via the receiving optical amplifier 75 whose optical output is controlled by the exciting light source 70'. The wavelength division demultiplexing equipment 92 demultiplexes the received multiplexed light signal to obtain light signals of 16 wavelengths, and transmits them to a line terminal equipment (not shown) through an output interface. In this case, the receiving optical amplifier 75, using the light signal multiplexing number (wavelength multiplexing number) information contained in the surveillance light signal transmitted from the upstream side, automatically controls its gain according to the light signal multiplexing number to keep the optical levels of the light signals constant.

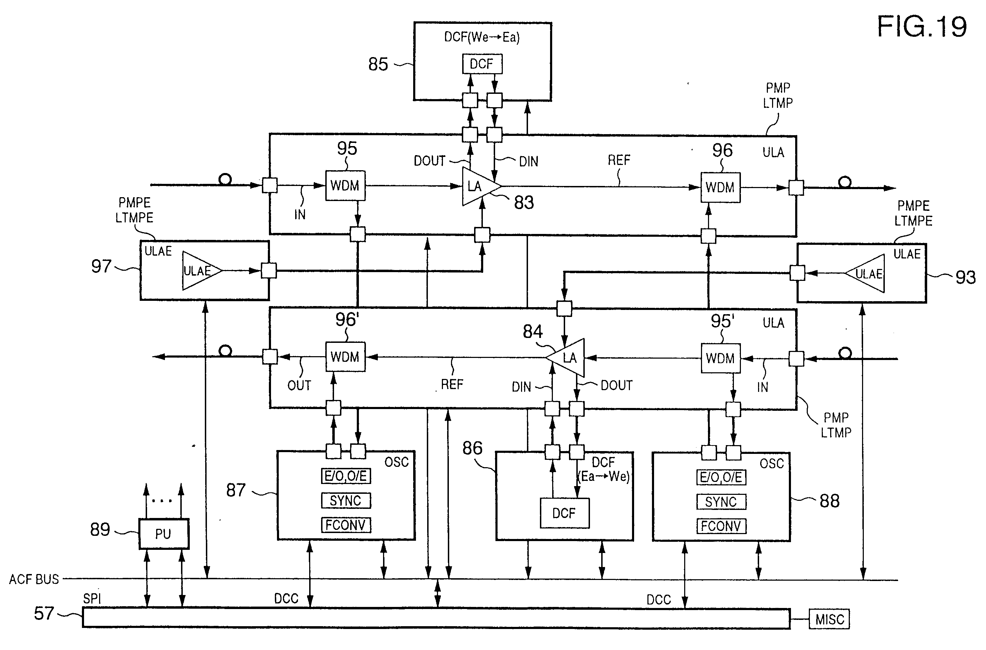

Fig. 19 is a block diagram of an exemplary arrangement of the LA when line optical fibers are provided separately for the East and West directions. In Fig. 19, 95, 95', 96 and 96' denote wavelength division multiplexing/demultiplexing equipment, 97 and 98 denote exciting light sources, and other symbols and numerals are the same as those of Fig. 17.

The LA of Fig. 19 is arranged to provide line optical fibers separately for the East and West directions, and has the same basic arrangement as that of the LA explained in Fig. 17. That is, in Fig. 19, an input light signal received from the optical fiber of the West side is demultiplexed by the wavelength division multiplexing/demultiplexing equipment 95 to separate the surveillance light signal therefrom, and the surveillance light signal is input to the OSC terminal 87. A 16-wavelength multiplexed, main signal is compensated for the transmission characteristics by the transmission characteristic compensator 85, and then input to the wavelength division multiplexing/demultiplexing equipment 96 through the optical amplifier 83 whose optical output is controlled by the exciting light source 97. In this case, the optical amplifier 83, using the wavelength multiplexing number information contained in the surveillance light signal transmitted from the upstream side, automatically controls its gain according to the wavelength multiplexing number to keep constant the optical levels of the light signals of wavelengths. The wavelength division multiplexing/demultiplexing equipment 96 multiplexes the multiplexed light signal from the optical amplifier 83 with the surveillance light signal from the OSC terminal 88 and transmits its multiplexed signal to the line optical fiber of the East side. Similarly, an input light signal received from the line optical fiber of the East side is transmitted to the optical fiber of the West side via the wavelength division multiplexing/demultiplexing equipment 95', optical amplifier 84 and wavelength division multiplexing/demultiplexing equipment 96'.

In the ET and LA explained in Figs. 14 to 19, light signal levels (optical powers) at the function parts of the ET and LA are controlled by the supervisory controller via the ACF bus, and the levels of the light signals can be adjusted. Explanation will first be made as to how to control of channel light input powers as light powers of light signals of a plurality of wavelengths transmitted from a plurality of line terminal equipment.

Adjustment of the channel light input powers is necessary for adjustments at the time of constructing its facility, compensation for optical level attenuation caused by time passage after the construction, etc. The adjustment of the channel light input powers is carried out by the ET having the wavelength division multiplexing equipment. The adjustments at the time of the construction are carried out, as an example, as follows. First, monitor light is extracted from a light monitor point provided in the output side of the transmitting optical amplifier 74 in Fig. 14 and is analyzed with use of a light spectrum analyzer or the like, and then the levels of the light signals of wavelengths are displayed. And a light intensity adjuster provided to the wavelength division multiplexing equipment 71 is controlled from a control terminal connected to the supervisory controller 56 so that the powers of the light signals of wavelengths at an output of the transmitting optical amplifier 74 in Fig. 14 are balanced and so that the levels of the light signals of wavelengths from the transmitting optical amplifier 74 are set at a predetermined level.

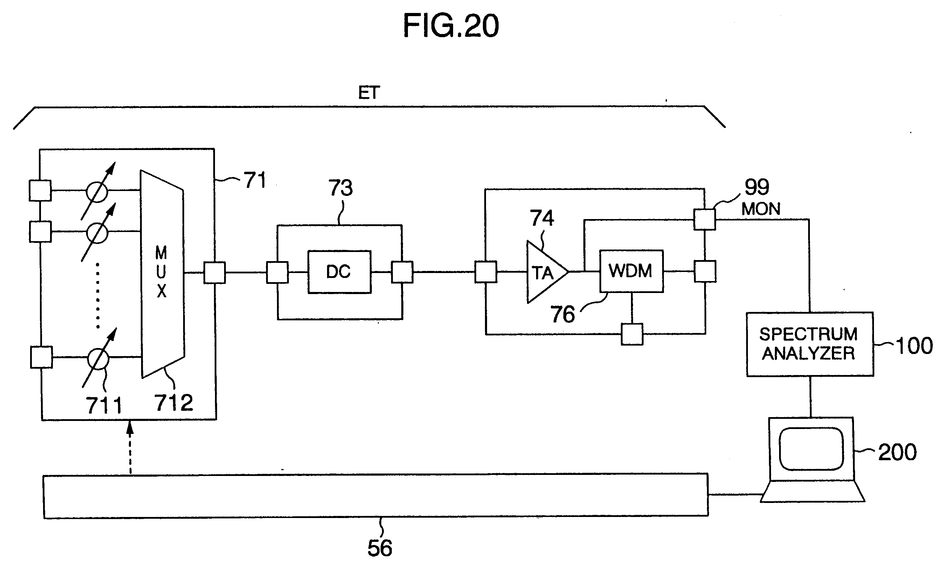

As a result, the multiplexed transmission light signal can be set in its optimum condition. Once such adjustments as mentioned above were carried out, the supervisory controller 56 stores and manages its adjustments and set levels in a nonvolatile memory or the like for the respective channels, whereby these are automatically fed back whenever necessary to compensate for a light level drop caused by the deterioration of the transmitting light source. As a result, even when a transmitting optical amplifier from any production lot is used as the transmitting optical amplifier 74, a predetermined transmission output can be always kept independently of the channels and thus uniform transmission quality can be realized. This will be explained by referring to Figs. 20 to 24.

Fig. 20 is a diagram for explaining how to controllably adjust optical powers of light signals received from a plurality of line terminal equipment with use of the monitor output of the optical amplifier of the ET. Explanation will be made in the following as to details of how to variably control channel light input powers as the optical powers of light signals of a plurality of wavelengths received from the plurality of line terminal equipment.

Illustrated in Fig. 20 are an ET including a wavelength division multiplexing unit 71 having a light intensity adjuster 711 for adjusting the levels of signals of a plurality of wavelengths received from a line terminal equipment (not shown) and a wavelength division multiplexer 712, a transmission characteristic adjuster 73, a transmitting optical amplifier 74, and a supervisory controller 56, a spectrum analyzer 100, and a control terminal 200. The spectrum analyzer 100 is connected to a monitor port 99 of the transmitting optical amplifier 74, and the control terminal 200 is connected to a craft interface of the supervisory controller 56. Interconnection between the spectrum analyzer 100 and control terminal 200 is carried out by means of a general purpose interface bus (GP-IB).

With such an arrangement, it is possible to monitor the optical powers of the light signals after passage of the transmission characteristic compensator 73 and the transmitting optical amplifier 74. And by feeding its monitored result back to the light intensity adjuster 711, such control can be realized as to eliminate differences in the optical powers between the light signals of wavelengths. The control may be carried out during actual transmission of the signals with use of the feedback system. The control may also be realized by writing a measured result in a nonvolatile memory which stores a reference voltage (to be explained later) of the feedback system to the light intensity adjuster 711. As a result of such control, even when a transmitting light source provided in the line terminal equipment is deteriorated with time passage and its light power level is reduced, the light intensity adjuster 711 can compensate for the level reduction.

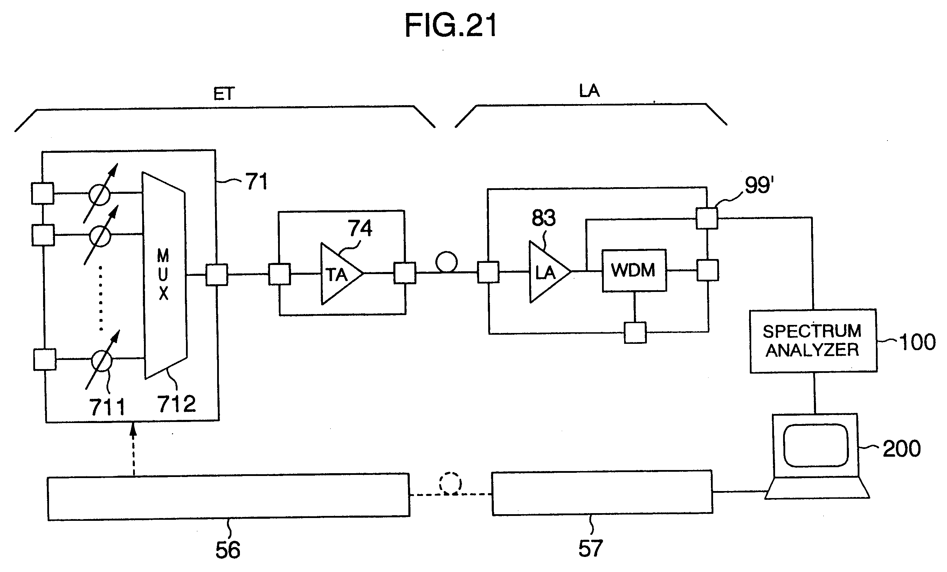

Fig. 21 is a diagram for explaining how to controllably adjust optical powers of light signals received from a plurality of line terminal equipment with use of a monitor output from an optical amplifier of an LA. The arrangement of Fig. 21 corresponds to the arrangement of Fig. 20 but an LA including an optical amplifier 83 and a surveillance information controller 57 is added. For simplicity of the drawing, transmission characteristic compensators provided in the ET and LA are omitted. The spectrum analyzer 100 is connected to a monitor port 99' of the line optical amplifier 83. The control terminal 200 is connected to the craft interface of the surveillance information controller 57. Since the surveillance information controller 57 is connected to the supervisory controller 56 using the OSC, it is possible to control the light intensity adjuster 711 from the side of the control terminal 200.

With this arrangement, it is possible to monitor the optical powers of the light signals after passage of the optical amplifier 83 of the LA. And by feeding its monitored result back to the light intensity adjuster 711 of the wavelength division multiplexing unit 71, such control can be realized as to eliminate differences in the optical powers between the light signals of wavelengths. The control may be carried out at all time with use of the feedback system, or the control may be realized by writing a measured result in a memory of the light intensity adjuster 711, as in the embodiment of Fig. 20.

It will be obvious that the above control can be realized with use of the monitor output of the receiving optical amplifier. It will also be appreciated that, although the above explanation has been made in connection with the unidirectional transmission case in the foregoing embodiment, the invention can be applied even to a bi-directional transmission case.

In accordance with the present embodiment, such control is possible as to put a multiplexed transmitting light signal in its optimum condition, that is, that the optical powers of the light signals of different wavelengths can be balanced. It is also possible to adjust the powers of light signals of different wavelengths to be sent to a plurality of line terminal equipment.

This control can be utilized for automatic adjustment of the powers of input light signals in input channels at the time of constructing the system, for adjustment of setting of an attenuation in the LC at the time of the system construction by a maintenance operator, for adjustment of compensation for deterioration of optical levels in equipment of the system in use, and for other adjustment.

As already explained, the light intensity adjuster provided in the wavelength division multiplexer 71 can be controlled from the side of an external control terminal connected to the supervisory controller so that the powers of light signals of wavelengths for channels in the output of the transmitting optical amplifier 74 can be balanced and also so that the light signals of wavelengths in the output of the transmitting optical amplifier 74 can have a predetermined level. This enables a user or a site installer to easily set the channel light input powers through the external terminal.

Further, when set values are previously held in the system as mentioned above, such automatic control can be realized as to set the set values in the system even after its actual use of the system. That is, the ET can perform suitable automatic adjustment independently even when the external terminal and measuring device were removed from the system.

The ET in the embodiment of the present invention can collectively set and manage the powers of transmitting light signals of wavelengths according to an actual system in such a manner as mentioned above. Further, the light intensity adjuster, unlike a general light attenuator, does not attenuate light always and can adjust a light gain. Thus such an adjuster is effective for the purpose of maintaining the transmitting optical powers at a predetermined level to maintain and control a optical transmission quality.

Explanation will next be made as to the arrangement of the light intensity adjuster with use of Figs. 22 and 23. Fig. 22 is a diagram for explaining control of a light intensity adjuster provided between a plurality of line terminal equipment and an wavelength division multiplexer. Fig. 23 is a diagram for explaining a relationship by comparison between outputs of the line terminal equipment, an output of the light intensity adjuster and an output of the wavelength division multiplexer.

Fig. 22 is for more detailed explanation of the light intensity adjuster explained in Figs. 20 and 21, corresponding to one wavelength of the wavelength division multiplexing unit 71 of the ET in Fig. 20. A light signal from the line terminal equipment is branched by an optical coupler 713 and part of the light signal is monitored by an input PD 714. Major part of the light signal is amplified by the light intensity adjuster 711, passed through a coupler 715, and then multiplexed by a wavelength division multiplexer 712 with light signals of other wavelengths. The light signal partly branched by the coupler 715 is converted to an electrical signal by a PD 716, compared with a reference voltage 718 by a differential amplifier 717, and then fed back to the light intensity adjuster 711 from a light intensity adjuster controller 719. In the embodiment explained in Figs. 20 and 21, control is realized by dynamically changing the reference voltage or writing its value in a memory which stores the reference voltage 718. In this connection, the above light intensity adjuster 711 may be considered as a small-size optical amplifier. That is, the controller 719 controls the exciting power of the small-size optical amplifier. However, since the light intensity adjuster does not require a large exciting power, the adjuster is inexpensive and it becomes unnecessary to consider its cooling problem.

Fig. 23 shows signal levels at various parts in Fig. 22. The output level of a transmitting light source in the line terminal equipment is obtained at the input of the wavelength division multiplexing unit, and the light intensity adjuster can adjust a light intensity in a range up to 10dB. The light signal has a loss of 7-13dB after passage of the wavelength division multiplexer.

In the adjustment of the signal level by an attenuator, an attenuation must be set at a level higher than its target level at the time of its initial setting because a transmission distance is determined by the signal attenuation. However, since the light intensity adjuster in the present embodiment amplifies the light signal, a long transmission distance can be achieved due to the initial set condition. Further, the light intensity adjuster, which maintains a predetermined optical transmission power, is effective for maintaining and managing an optical transmission quality.

In the optical transmission system explained in the foregoing, for maintaining the transmission quality of the signals of wavelengths, it is necessary to control the powers of the transmitting light signals of wavelengths in a predetermined range. In the optical transmission system, to this end, the outputs of the signals to the line optical fiber can be controlled to be constant to suppress a variation in the optical loss generated in a transmission span and to send the signal to the next span. Therefore, the adjustment of the levels of wavelengths by the wavelength division multiplexer becomes important.

The transmission characteristic compensators provided in the ET and LA compensate for the transmission characteristics of the line optical fiber. However, in order to suppress a non-linear effect in the transmission characteristic compensator, it is necessary to suppress the optical powers of channel signals input to the transmission characteristic compensator to a predetermined value or less. Conversely, in order to suppress degradation of a signal S/N ratio caused by the optical loss in the transmission characteristic compensator, it becomes necessary to set the optical powers of channel signals input to the transmission characteristic compensator to be large to some extent. The ET and LA explained in the foregoing are arranged to satisfy the conditions by adjusting the amplification factor of the optical amplifier at the preceding stage of the transmission characteristic compensator.

As a result, the above ET and LA can suppress the non-linear effect of the transmission characteristic compensator and avoid the degradation of the signal S/N ratio, thus improving the transmission quality of light signals. The ET and LA explained in Figs. 16 to 18 are arranged to increase the level of the optical output of the optical amplifier by supplying the exciting light signal from the exciting light source to the optical amplifier. This control will then be explained.

For example, in the ET shown in Fig. 18, the supervisory controller 56 detects by an optical input detector the optical powers of input light signals of the channels in the input interface of the wavelength division multiplexer 91, recognizes channels having optical powers of a predetermined level or more as transmission channels and channels having optical powers less than the predetermined level as non-transmission channels, counts the number of transmission channels, regards the counted number as a wavelength number, controls the exciting optical power from the exciting light source 70 according to the wavelength number, and supplies it to the optical amplifier 74. This enables control of the level (power) of the optical output of the optical amplifier 74. This wavelength number information is carried on the surveillance light signal, and then transmitted to the LA, LR, etc. on the downstream side to be used for control of the optical amplifiers.

The optical transmission system in the present embodiment counts the wavelength number. There is no need to obtain whether optical signal transmitters are working or not from optical signal transmitters. Therefor, the optical transmission system is independent from types of optical signal transmitters.

Such optical amplifier control is valid because the output powers of the light signals of wavelengths from the optical amplifiers will not changed and kept at a predetermined level due to the multiplexed wavelength number. In general, an optical amplifier has a problem that, when the optical outputs of all channels are controlled to have a predetermined value, a change in the wavelength multiplexing number causes fluctuations of the output levels of light signals of wavelengths. However, when such control based on the wavelength number information as mentioned above is carried out, the output levels of the light signals of wavelengths can be controlled to have a predetermined level.

As has been explained in the foregoing, an accordance with the present invention, the transmission levels of input light signals of wavelengths can be optimally controlled, compensation for transmission characteristics can be completely realized, thus improving the reliability of the entire system.

The light intensity adjuster usable in the present invention is as disclosed in JP-A-08-278523 which corresponds to U.S.Patent No. 5,675,432, the disclosure of which is herein incorporated by reference.

## Claims

1. An optical transmission system for transmitting a plurality of optical main signals, said optical transmission system comprising a plurality of optical transmission subsystems connected in parallel for transmitting one of the optical main signals, two of the plurality of optical transmission subsystems having an optical surveillance signal transmitting unit;
wherein one of the optical surveillance signal transmitting unit is used as a working system and the other is used as a protection system, and one of optical surveillance signal transmitting units performs transfer of monitor information on the optical transmission subsystems.

2. An optical transmission system for transmitting an optical main signal, comprising:
a first optical transmission subsystem having a first optical surveillance signal transmitting unit for transmitting an optical surveillance signal;
a second optical transmission subsystem having a second optical surveillance signal transmitting unit for transmitting the optical surveillance signal;
a line regenerator equipment which regenerates the optical main signal; and
an enhanced optical fibre provided between the first and second optical surveillance signal transmitting units for transmitting the optical surveillance signal;
wherein said first optical transmission subsystem, said line regenerator and said second optical transmission subsystem are connected in series for transmitting the optical main signal.

3. A method of surveying an optical transmission system which transmits a plurality of optical main signal, wherein said system has a plurality of optical transmission subsystems connected in parallel for transmitting one of the optical main signals; with two of the plurality of optical transmission subsystems having an optical surveillance signal, and wherein one of the optical surveillance transmitting unit is used as a working system and the other is used as a protection system,
said method comprising the steps of:
surveying the optical transmission subsystems,
multiplexing the surveillance signal which includes information of the optical transmission system and one of main signals to form a multiplexed light, and
transmitting the multiplexed light.

4. The method of claim 3, wherein said surveillance signal has a frame format.
